# EUROPEAN PATENT APPLICATION

(11) **EP 2 043 343 A1**
(43) Date of publication of application: **01.04.2009**
(21) Application number: 08715213.8
(22) Date of filing: 12.03.2008
(51) Int. Cl.: H04M 3/42

(54) **A CALL FORWARDING METHOD AND A COMMUNICATION SYSTEM**

(30) Priority: 13.03.2007 CN 200710086759
(71) Applicant: Huawei Technologies Co., Ltd., Longgang District, Shenzhen Guangdong 518129 (CN)
(72) Inventor: WANG, Dabing, Guangdong 518129 (CN); MAO, Jiahua, Guangdong 518129 (CN)
(74) Representative: Gulde Hengelhaupt Ziebig & Schneider
(86) International application number: PCT/CN2008/070477
(87) International publication number: WO 2008/110118

(57) **Abstract**

A call forwarding method and a communication system are provided, the call forwarding method includes the following steps: source CTI platform forwards the call of the user terminal accepted by source phone resource device to the target phone resource device according to the call suspending-forwarding request of the source phone resource device, and sets the state of the source phone resource device to be suspended according to the response message provided by the target phone resource device that the call is accepted; on receiving the call releasing notification sent by the target CTI platform on the base of the finish of the call by the target phone resource device, setting the state of the source phone resource device to be active according to the call releasing notification, and forwarding the call of the user terminal back to the source phone resource device. The embodiments of the present invention can reduce the degree of coupling of the platform and the service side in the service of call forwarding, thus improve the reliability of the system.

## Description

This application claims priority to Chinese Patent Application No. 200710086759.6, entitled "Call Transfer Method, Computer Telephone Integration Platform, Traffic Resource Device, Call Center System and Communication System" and filed on March 13, 2007, which is hereby incorporated by reference in its entirety.

### Field of the Invention

The present invention relates to call hang and transfer technologies of a call center and in particular to a call transfer method and a communication system.

### Background of the Invention

With development of technologies and enhancement of customer service consciousness of enterprises, more and more enterprises have established a Call Center (CC) for providing customers with improved services. The call center, also referred to as a customer service center, is an integrated information service system which provides customers with high-quality, efficient and comprehensive services by making full use of functions of a communication network and a computer network based upon Computer Telephone Integration (CTI) technologies.

Currently, across-region service enterprises of telecom operators, finances, etc., usually have established and maintained functionally diverse call centers as required for technical update, service update, provision of value-added services and call center outsourcing services, etc. Traffic resources tend to be shared among a plurality of call centers due to limited traffic resources of a signal call center. In this case, a call center needs to have a function of call hang and transfer, that is, a call center (the first call center as referred below to for convenient descriptions) may transfer a call to another call center (the second call center as referred below to) as needed. The first call center is in a suspended state (i.e., it is in an idle state and can not process any new call) during the processing of the second call center, the call is returned automatically to the first center at the end of the processing of the second call center, and the first call center resumes an active state and continues with service provision. For example, the following service application typically occurs in a customer service scenario: the first call center processes a call of a user who applies for a service, but the balance of his account is not sufficient to make the service available for him as applied for, so the first call center transfers this call to the second call center, and after the user replenishes his account, the second call center transfers the call back to the first call center which continues to process the application of the service for the user.

In a solution of the prior art, the first call center transfers the user call together with identification information of a source traffic resource device processing the call to the second call center, and the source traffic resource device sets its current state to a suspended state to prevent the first call center from distributing a new call thereto; and after a target traffic resource device of the second call center processes the call, the call may be transferred back to the source traffic resource device only after the source traffic resource device is instructed to set its current state to an active state so as to continue with processing the call.

The inventors have found from a research during making the invention that in the above existing process, the state of the source traffic resource device is configured primarily with the cooperation between the source traffic resource device and the target traffic resource device, which may increase a coupling degree between the platform and the service side during the entire call transfer service and hence result in degraded reliability of the system. For example, a possible situation may arise in which the target traffic resource device has not transferred the call back to the source traffic resource device after instructing the source traffic resource device to set its current state to an active state while the first call center has allocated a new call to the source traffic resource device, thus resulting in a call transfer failure.

### Summary of the Invention

Embodiments of the invention provide a call transfer method, a communication system, a computer telephone integration platform, a traffic resource device and a call center system to reduce a coupling degree between the platform and the service side in a call transfer service and hence improve reliability of the system.

In order to resolve the above technical problem, the embodiments of the invention provide the following technical solutions.

A call transfer method includes:
transferring, by a source computer telephone integration (CTI) platform, a call from a user terminal that is processed by a source traffic resource device to a target traffic resource device upon a call hang and transfer request from the source traffic resource device, and setting the source traffic resource device in a suspended state in accordance with a call processing response message provided from a target CTI platform; and
receiving a call release notification message sent from the target CTI platform after the target traffic resource device processes the call, setting the source traffic resource device in an active state, and transferring the call of the user terminal back to the source traffic resource device.

A computer telephone integration platform includes:
a receiving unit adapted to receive a call hang and transfer request from a source traffic resource device as well as a call processing response message and a call release notification message from a target computer telephone integration (CTI) platform;
a call transfer unit adapted to transfer a call of a user terminal that is processed by the source traffic resource device to a target traffic resource device after the receiving unit receives the call hang and transfer request and to transfer the call of user terminal released by the target traffic resource device back to the source traffic resource device when the receiving unit receives the call release notification message; and
a device state update unit adapted to set the source traffic resource device in a suspended state when the receiving unit receives the call processing response message and to set the source traffic resource device in an active state when the receiving unit receives the call release notification message.

A traffic resource device includes:
a sending unit adapted to send to a CTI platform to which the traffic resource device is homed a shared traffic resource device query request as well as a call hang and transfer request, wherein the call hang and transfer request includes an identity of a target traffic resource device and an identity of a target CTI platform to which the device is homed, which are obtained by a target identity obtaining unit;
a receiving unit adapted to receive information about the shared traffic resource devices, which is returned from the CTI platform according to the shared traffic resource device query request; and
the target identity obtaining unit adapted to obtain the identity of the target traffic resource device and the identity of the CTI platform to which the device is homed in accordance with the information about the shared traffic resource device and a call transfer instruction from a user terminal.

A call center system includes an automatic call distribution device, a CTI platform and a traffic resource device.

The automatic call distribution device is adapted to route a call from a user terminal to the CTI platform.

The CTI platform is adapted to distribute the call of the user terminal to the traffic resource device; to receive a call hang and transfer request from the traffic resource device; to transfer the call of the user terminal processed by the traffic resource device to a target traffic resource device; to receive a call processing response message from a target CTI platform and set the traffic resource device in a suspended state in accordance with the message; and to receive a call release notification message from the target CTI platform, set the traffic resource device in an active state in accordance with the message and transfer the call of the user terminal released by the target traffic resource device back to the traffic resource device.

The traffic resource device is adapted to send the call hang and transfer request to the CTI platform in accordance with the call transfer instruction from the user terminal.

A communication system includes a source call center system and a target call center system, wherein the source call center system includes a source automatic call distribution device, a source CTI platform and a source traffic resource device, and the target call center system includes a target automatic call distribution device, a target CTI platform and a target traffic resource device.

The source automatic call distribution device is adapted to route a call of a user terminal to the source CTI platform.

The source CTI platform is adapted to distribute the call of the user terminal to the source traffic resource device; to receive a call hang and transfer request sent from the source traffic resource device and transfer the call of the user terminal processed by the source traffic resource device to the target traffic resource device; to receive a call processing response message from the target CTI platform and set the source traffic resource device in a suspended state in accordance with the message; and to receive a call release notification message from the target CTI platform, set the source traffic resource device in an active state in accordance with the message and transfer the call of the user terminal released by the target traffic resource device back to the source traffic resource device.

The source traffic resource device is adapted to send the call hang and transfer request to the source CTI platform in accordance with the call transfer instruction from the user terminal.

The target automatic call distribution device is adapted to send a call processing request to the target CTI platform in accordance with the call from the source CTI platform.

The target traffic resource device is adapted to send a call processing end message to the target CTI platform at the end of processing the call of the user terminal.

The target CTI platform is adapted to route the call of the source CTI platform to the target traffic resource device according to the call processing request; to send the call processing response message to the source CTI platform; and to release the call of the user terminal in accordance with the call processing end message and send the call release notification message to the source CTI platform.

As apparent from the above technical solutions, during the entire call transfer service, the state of the source traffic resource device is set only by the source CTI platform independently of the source traffic resource device and the target traffic resource device without any additional data exchange. Therefore the embodiments of the invention can reduce the coupling degree between the platform and the service side in the call transfer service and improve reliability of the system.

### Brief Description of the Drawings

Figure 1 is a structural diagram of a communication system according to a first embodiment of the invention;

Figure 2 is a flow chart of a call transfer method according to a second embodiment of the invention;

Figure 3 is a structural diagram of a computer telephone integration platform according to a fifth embodiment of the invention;

Figure 4 is a structural diagram of a computer telephone integration platform according to a sixth embodiment of the invention;

Figure 5 is a structural diagram of a computer telephone integration platform according to a seventh embodiment of the invention;

Figure 6 is a structural diagram of a traffic resource device according to an eighth embodiment of the invention; and

Figure 7 is a structural diagram of a call center system according to a ninth embodiment of the invention.

### Detailed Description of the Embodiments

The invention provides a call transfer method, a computer telephone integration platform, a traffic resource device, a call center system and a communication system. Embodiments of the call transfer method and the corresponding devices according to the invention will be described in details below.

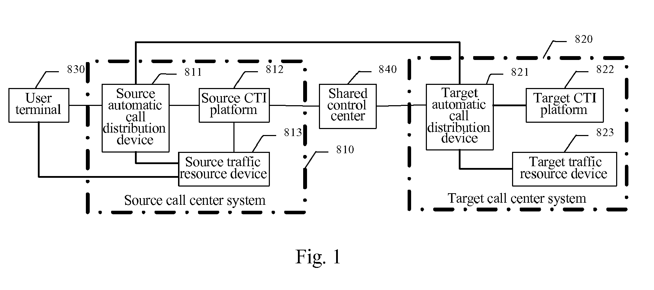

An embodiment of communication system, as shown in Figure 1, includes a source call center system 810, a target call center system 820 and a user terminal 830. The source call center system 810 includes a source automatic call distribution device 811, a source computer telephone integration platform 812 (Source CTI platform 812) and a source traffic resource device 813; and the target call center system 820 includes a target automatic call distribution device 821, a target computer telephone integration platform 822 (Target CTI platform 822) and a target traffic resource device 823.

The source automatic call distribution device 811 is adapted to route a call of the user terminal 830 to the Source CTI platform 812.

The Source CTI platform 812 is adapted to distribute the call of the user terminal 830 to the source traffic resource device 813 through the source automatic call distribution device; to receive a call hang and transfer request sent from the source traffic resource device 813 and transfer the call of the user terminal 830 processed by the source traffic resource device 813 to the target traffic resource device 823 through the source automatic call distribution device 811; to receive a call processing response message from the Target CTI platform 822 and set the source traffic resource device 813 in a suspended state in accordance with the message; and to receive a call release notification message from the Target CTI platform 822, set the source traffic resource device 813 in an active state in accordance with the message and transfer the call of the user terminal 830 released by the target traffic resource device 822 back to the source traffic resource device 813.

The source traffic resource device 813 is adapted to send the call hang and transfer request to the Source CTI platform 812 in accordance with the call transfer instruction from the user terminal 830.

The target automatic call distribution device 821 is adapted to send a call processing request to the Target CTI platform 822 in accordance with the call from the Source CTI platform 812.

The target traffic resource device 823 is adapted to send a call processing end message to the Target CTI platform 822 at the end of processing the call of the user terminal 830.

The Target CTI platform 822 is adapted to route the call of the Source CTI platform 812 to the target traffic resource device 823 according to the call processing request; to send the call processing response message to the Source CTI platform 812; and to release the call of the user terminal 830 in accordance with the call processing end message and send the call release notification message to the Source CTI platform 812.

The above communication system may further include a shared control center 840 adapted to receive sharable information of the traffic resource devices reported from the Target CTI platform 822 and to provide the Source CTI platform 812 with the information of the sharable traffic resource device.

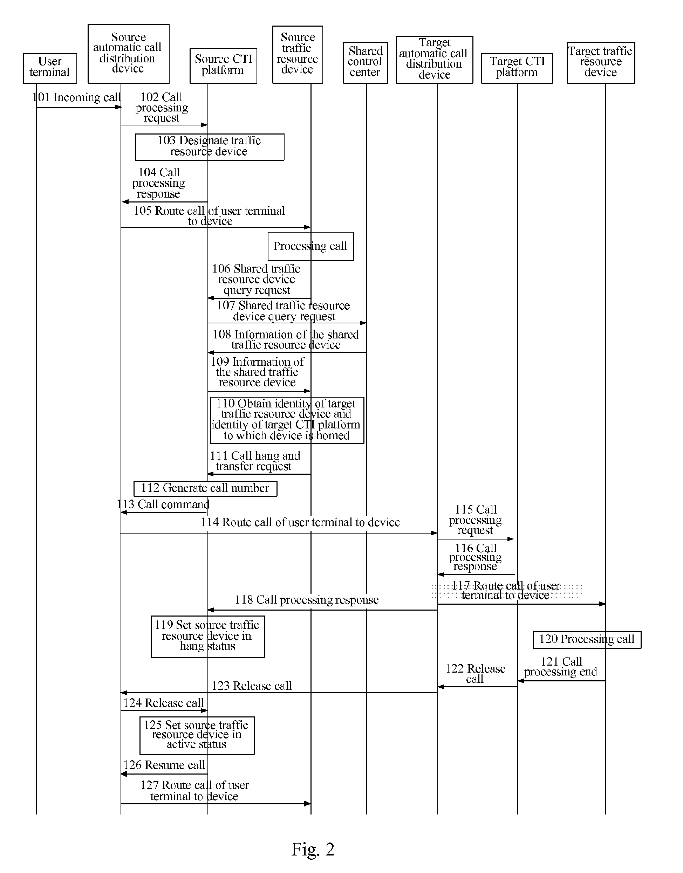

An embodiment of call transfer method includes the following steps with reference to Figure 2 in conjunction with Figure 1.

101 to 105: The source Automatic Call Distribution (ACD) device receives a call from the user terminal and sends to the source CTI platform the call processing request including information of the call of the user terminal; the source CTI platform designates a source traffic resource device to process the call of the user terminal in accordance with the information of the call of the user terminal and sends a call processing response message to the source ACD; and the source ACD routes the call of the user terminal to the designated source traffic resource device in accordance with the response message.

In the embodiment of the invention, the traffic resource device primarily refers to a traffic representative or to a logic entity which provides a user with a service by a skill queue, an automatic voice service flow, etc.

106: The source traffic resource device processes the call of the user terminal and sends a shared traffic resource device query request to the source CTI platform in accordance with the call transfer instruction from the user terminal.

107 to 109: The source CTI platform forwards the shared traffic resource device query request to the Shared Control center (SCC), the SCC returns the shared information of the traffic resource devices to the source CTI platform according to the query request, and the source CTI platform provides the source traffic resource device with the information.

The shared information of the traffic resource device may be reported from the CTI platforms managed by the SCC in advance or in a real time way in accordance with a shared traffic resource device report request sent from the SCC. The shared traffic resource device report request may be sent from the SCC upon receiving the shared traffic resource device query request sent from the source CTI platforms.

The information of the traffic resource device may include: an identity of the traffic resource device, service function information (e.g., service function identity, service function description information, etc.), an identity of a CTI platform to which the traffic resource device is homed.

110: The source traffic resource device determines a target traffic resource device in accordance with the shared information of the traffic resource device and the call transfer instruction from the user terminal, and extracts from the shared information of the traffic resource device the device identity corresponding to the target traffic resource device determined and the identity of a target CTI platform to which the target traffic resource device is homed.

The source traffic resource device may search for traffic resource devices capable of processing a service function indicated by service type information in the call transfer instruction of the user terminal in accordance with the shared service function information of the traffic resource devices provided from the source CTI platform and determines the target traffic resource device therefrom.

111: The source traffic resource device sends to the source CTI platform the call hang and transfer request including the identity of the target traffic resource device and the identity of the target CTI platform to which the target traffic resource device is homed.

112 to 113: The source CTI platform generates a call number in accordance with the identity of the target traffic resource device and sends to the source ACD a call command including the identity of the target CTI platform and the generated call number.

The call number generated by the source CTI platform may further include a preset access number which is a specific number configured uniformly by the system and is added in the call number to notify the CTI platform received the call number that the processed call is to serve another call center system.

114: The source ACD routes the call of the user terminal carrying the call number to the target ACD in accordance with the identity of the target CTI platform.

115: The target ACD sends to the target CTI platform the call processing request including the call number.

116 to 118: The target CTI platform returns a call processing response to the target ACD, and the target ACD distributes the call to the target traffic resource device indicated by the identity of the target traffic resource device on one hand and returns the call processing response message to the source CTI platform through the source ACD on the other hand.

119 to 120: The source CTI platform sets the source traffic resource device in a suspended state, and on the other hand the target traffic resource device processes the call of the user terminal.

121 to 122: The target traffic resource device sends the call processing end message to the target CTI platform at the end of processing the call of the user terminal, and the target CTI platform controls the target ACD to release the call of the user terminal.

123 to 127: The target ACD sends the call release notification message to the source CTI platform through the source ACD to notify the source CTI platform of releasing of the call, and the source ACD resumes the source traffic resource device from the suspended state to an active state and transfers the call back to the source traffic resource device for continued processing.

Another embodiment of call transfer method is analogous to the embodiment showed in the Figure 1 except that this embodiment adopts a mechanism where the SCC sends on its own initiative the shared information of the traffic resource device to a managed CTI platform and the source CTI platform stores and updates the shared information of the traffic resource device provided from the SCC. In a specific implementation, 107 to 109 in the first embodiment may be modified as follows.

107': The source CTI platform obtains the locally stored shared information of the traffic resource device, in which the device information is provided by the SCC on its own initiative to the source CTI platform in advance.

Specifically, the SCC may send on its own initiative the shared information of the traffic resource device to the source CTI platform, in a way that the SCC sends information of all shared traffic resource devices to the source CTI platform periodically, or in a way that after a CTI platform reports shared traffic resource devices, the SCC sends the information of shared traffic resource devices reported from the CTI platform to other managed CTI platforms.

In a further embodiment of the invention, the source CTI platform receiving the shared information of the traffic resource devices may also select a shared traffic resource device in accordance with the shared information of the traffic resource devices and provide the source traffic resource device with the selected shared information of the traffic resource device complying with a certain condition. In a specific implementation, a filter process may be executed by the source CTI platform in accordance with a user designated condition or in accordance with a default condition (e.g., an even allocation principle) in the case of absence of a specific user requirement.

Another embodiment of a call transfer method is analogous to the embodiment showed in the Figure 1 except that the source CTI platform instead of the source traffic resource device determines the target traffic resource device in this embodiment. In a specific implementation, 106 to 111 in the embodiment may be modified as follows.

106": The source traffic resource device processes the call of the user terminal, and sends to the source CTI platform the call hang and transfer request including the service type information after receiving the call transfer instruction from the user terminal.

107": The source CTI platform obtains the shared information of the traffic resource device, determines the target traffic resource device in accordance with the information and the service type information, and extracts from the shared information of the traffic resource device the identity of the target traffic resource device and the identity of the target CTI platform to which the target traffic resource device is homed.

The shared information of the traffic resource device obtained by the source CTI platform may be returned from the SCC in accordance with the shared traffic resource device query request of the source CTI platform or stored locally by the source CTI platform after the SCC provides on its own initiative the source CTI platform with the information in advance. The shared information of the traffic resource device provided from the SCC to the source CTI platform may be reported from the CTI platform managed by the SCC in advance or in a real time way in accordance with a shared traffic resource device report request sent from the SCC.

Those ordinarily skilled in the art may appreciate that all or part of the steps in the method according the above embodiments may be implemented by a program instructing relevant hardware, and the program may be stored in a computer readable storage medium, e.g., a ROM/RAM, a diskette, an optical disk, etc., and which when being executed may implement part or all of the steps in any of the above embodiments.

Preferred embodiments of a computer telephone integration platform, a traffic resource device, a call center system and a communication system will be described below.

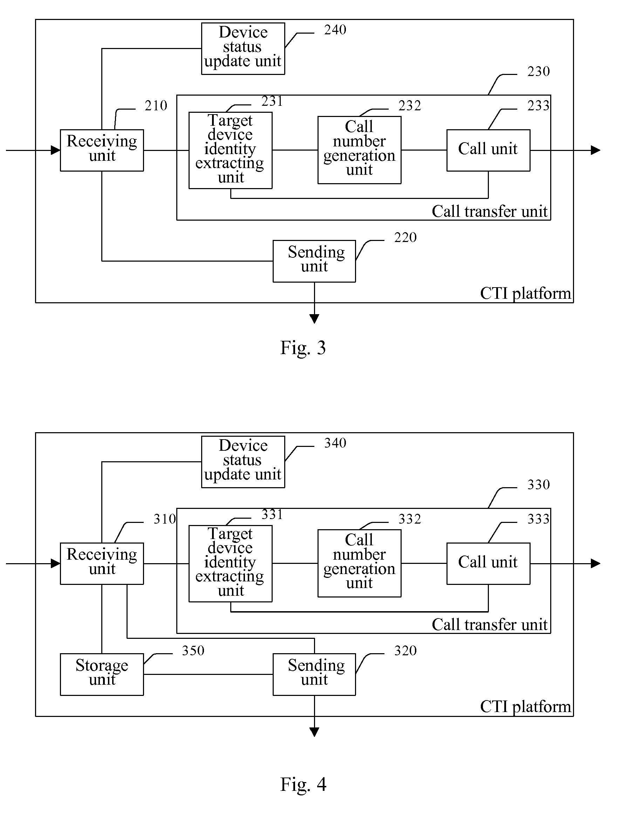

An embodiment of computer telephone integration platform includes a receiving unit 210, a sending unit 220, a call transfer unit 230 and a device state update unit 240 with reference to Figure 3.

The receiving unit 210 is adapted to receive from a source traffic resource device a shared traffic resource device query request and a call hang and transfer request that includes an identity of a target traffic resource device and an identity of a target CTI platform to which the target traffic resource device is homed; and to receive shared information of the traffic resource device that is provided from a shared control center in accordance with the received shared traffic resource device query request and receive a call processing response message and a call release notification message from the target CTI platform.

The sending unit 220 is adapted to forward to the shared control center the shared traffic resource device query request received by the receiving unit 210, and to provide the source traffic resource device with the shared information of the traffic resource device received by the receiving unit 210.

The call transfer unit 230 is adapted to transfer a call of a user terminal processed by the source traffic resource device to the target traffic resource device after the receiving unit 210 receives the call hang and transfer request, and to transfer the call of the user terminal released by the target traffic resource device back to the source traffic resource device when the receiving unit 210 receives the call release notification message. The call transfer unit 230 may further include a target device identity extracting unit 231, a call number generation unit 232 and a call unit 233.

The target device identity extracting unit 231 is adapted to extract the identity of the target CTI platform and the identity of the target traffic resource device from the call hang and transfer request.

The call number generation unit 232 is adapted to generate a call number in accordance with a preset access number and the identity of the target traffic resource device.

The call unit 233 is adapted to initiate a call to the target CTI platform in accordance with the identity of the target CTI platform, so as to transfer the call of the user terminal received by the source traffic resource device to the target CTI platform, to provide via the call the target CTI platform with the call number generated by the call number generation unit 232, and to transfer the call of the user terminal released by the target traffic resource device back to the source traffic resource device when the receiving unit 210 receives the call release notification message.

The device state update unit 240 is adapted to set the source traffic resource device in a suspended state when the receiving unit 210 receives the call processing response message and to set the source traffic resource device in an active state when the receiving unit 210 receives the call release notification message.

Another embodiment of computer telephone integration platform includes a receiving unit 310, a sending unit 320, a call transfer unit 330, a device state update unit 340 and a storage unit 350 with reference to Figure 4.

The receiving unit 310 is adapted to receive from a source traffic resource device a shared traffic resource device query request and a call hang and transfer request that includes an identity of a target traffic resource device and an identity of a target CTI platform to which the target traffic resource device is homed; and to receive shared information of the traffic resource device provided in advance from a shared control center and receive a call processing response message and a call release notification message from the target CTI platform.

The storage unit 350 is adapted to store the shared information of the traffic resource device provided from a shared control center in advance.

The sending unit 320 is adapted to send to the source traffic resource device the shared information of the traffic resource device obtained from the storage unit 350 in accordance with the shared traffic resource device query request.

The call transfer unit 330 is adapted to transfer a call of a user terminal received by the source traffic resource device to the target traffic resource device after the receiving unit 310 receives the call hang and transfer request, and to transfer the call of the user terminal released by the target traffic resource device back to the source traffic resource device when the receiving unit 310 receives the call release notification message. The call transfer unit 330 may further include a target device identity extracting unit 331, a call number generation unit 332 and a call unit 333.

The target device identity extracting unit 331 is adapted to extract the identity of the target CTI platform and the identity of the target traffic resource device from the call hang and transfer request.

The call number generation unit 332 is adapted to generate a call number in accordance with a preset access number and the identity of the target traffic resource device.

The call unit 333 is adapted to initiate a call to the target CTI platform in accordance with the identity of the target CTI platform, so as to transfer the call of the user terminal to the target CTI platform, to provide via the call the target CTI platform with the call number generated by the call number generation unit 332, and to transfer the call of the user terminal released by the target traffic resource device back to the source traffic resource device when the receiving unit 310 receives the call release notification message.

The device state update unit 340 is adapted to set the source traffic resource device in a suspended state when the receiving unit 310 receives the call processing response message and to set the source traffic resource device in an active state when the receiving unit 310 receives the call release notification message.

In other embodiments of the invention, the computer telephone integration platform further includes a device selection unit adapted to select a shared traffic resource device complying with a certain condition according to the shared information of the traffic resource device received by the receiving unit or stored in the storage unit and to provide the sending unit with the shared information of the traffic resource device corresponding to the device.

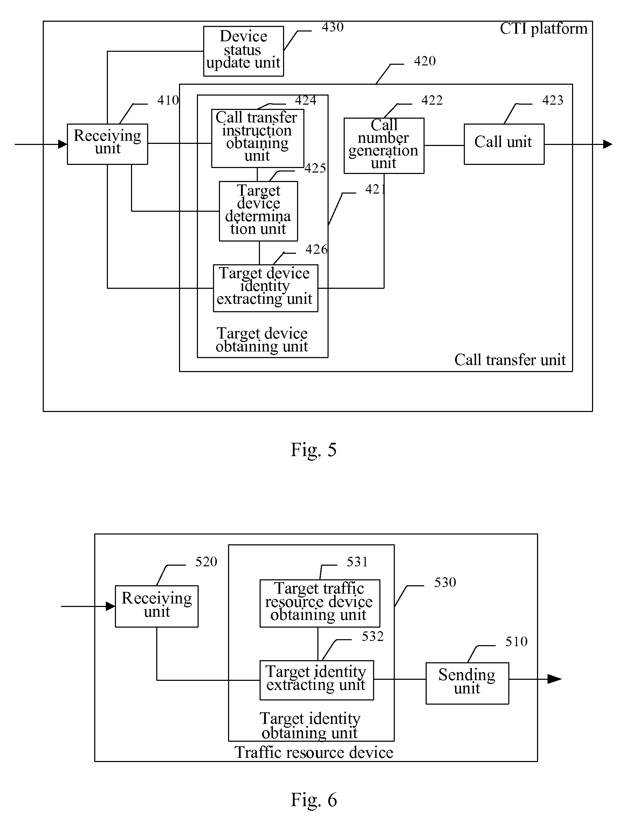

Another embodiment of computer telephone integration platform includes a receiving unit 410, a call transfer unit 420 and a device state update unit 430 with reference to Figure 5.

The receiving unit 410 is adapted to receive a call hang and transfer request from a source traffic resource device, shared information of the traffic resource device provided from a shared control center as well as a call processing response message and a call release notification message from a target CTI platform.

The call transfer unit 420 is adapted to transfer a call of a user terminal processed by the source traffic resource device to a target traffic resource device after the receiving unit 410 receives the call hang and transfer request and to transfer the call of the user terminal released by the target traffic resource device back to the source traffic resource device when the receiving unit 410 receives the call release notification message. The call transfer unit 420 specifically may include a target device obtaining unit 421, a call number generation unit 422 and a call unit 423.

The target device obtaining unit 421 is adapted to obtain the identity of the target CTI platform and the identity of the target traffic resource device. The target device obtaining unit 421 may further include a call transfer instruction obtaining unit 424, a target device determination unit 425 and a target device identity extracting unit 426.

The call transfer instruction obtaining unit 424 is adapted to obtain call transfer instruction of the user terminal from the call hang and transfer request.

The target device determination unit 425 is adapted to determine the target traffic resource device in accordance with the call transfer instruction and the shared information of the traffic resource device.

The target device identity extracting unit 426 is adapted to extract the device identity corresponding to the target traffic resource device and the identity of the target CTI platform to which the device is homed from the shared information of the traffic resource device.

The call number generation unit 422 is adapted to generate a call number in accordance with a preset access number and the identity of the target traffic resource device.

The call unit 423 is adapted to initiate a call for transferring the call of the user terminal to the target CTI platform in accordance with the identity of the target CTI platform, to provide via the call the target CTI platform with the call number generated by the call number generation unit 422, and to transfer the call of the user terminal released by the target traffic resource device back to the source traffic resource device when the receiving unit 410 receives the call release notification message.

The device state update unit 430 is adapted to set the source traffic resource device in a suspended state when the receiving unit 410 receives the call processing response message and to set the source traffic resource device in an active state when the receiving unit 410 receives the call release notification message.

An embodiment of traffic resource device includes a sending unit 510, a receiving unit 520 and a target identity obtaining unit 530 with reference to Figure 6.

The sending unit 510 is adapted to send to a CTI platform, to which the traffic resource device is homed, information including a shared traffic resource device query request and a call hang and transfer request, and the call hang and transfer request includes an identity of a target traffic resource device and an identity of a target CTI platform to which the target traffic resource device is homed, which are obtained by the target identity obtaining unit 530.

The receiving unit 520 is adapted to receive shared information of the traffic resource device returned from the CTI platform in accordance with the shared traffic resource device query request.

The target identity obtaining unit 530 is adapted to obtain the identity of the target traffic resource device and the identity of the target CTI platform to which the target traffic resource device is homed in accordance with the shared information of the traffic resource device and call transfer instruction from a user terminal. The target identity obtaining unit 530 may specifically include a target traffic resource device obtaining unit 531 and a target identity extracting unit 532.

The target traffic resource device obtaining unit 531 is adapted to determine the target traffic resource device in accordance with device description information in the shared information of the traffic resource device received by the receiving unit 520 and the call transfer instruction from the user terminal.

The target identity extracting unit 532 is adapted to extract the device identity corresponding to the target traffic resource device and the identity of the target CTI platform to which the device is homed from the information of the traffic resource device received by the receiving unit 520.

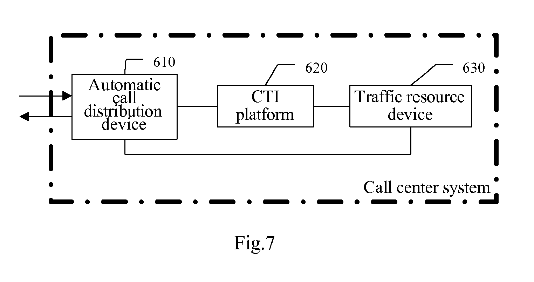

An embodiment of call center system includes an automatic call distribution device 610, a computer telephone integration platform 620 and a traffic resource device 630 with reference to Figure 7.

The automatic call distribution device 610 is adapted to route a call of a user terminal to the computer telephone integration platform 620.

The computer telephone integration platform 620 is adapted to distribute the call of the user terminal to the traffic resource device 630 through the automatic call distribution device 610; to receive a call hang and transfer request sent from the traffic resource device 630; to transfer the call of the user terminal processed by the traffic resource device 630 to a target traffic resource device through the automatic call distribution device 610; to receive a call processing response message from a target CTI platform and set the traffic resource device 630 in a suspended state in accordance with the message; and to receive a call release notification message from the target CTI platform, set the traffic resource device 630 in an active state in accordance with the message and transfer the call of the user terminal released by the target traffic resource device back to the traffic resource device 630.

The traffic resource device 630 is adapted to send the call hang and transfer request to the computer telephone integration platform 620 in accordance with a call transfer instruction of the user terminal.

Those ordinarily skilled in the art may appreciate that all or part of the steps in the method according the above embodiments may be implemented by a program instructing relevant hardware, and the program may be stored in a computer readable storage medium, e.g., a ROM/RAM, a magnetic disk, an optical disk, etc.

Summarily for above, the source CTI platform may set the source traffic resource device in a suspended state when transferring a user call to the target CTI platform without carrying the identity information of the source traffic resource device. When the call is transferred to the target traffic resource device, it is not necessary for the target traffic resource device to know from which traffic resource device the call to be processed is transferred, and at end of processing the call, it is not necessary for the target traffic resource device to instruct the source traffic resource device to set its current state to an active state but instead the call may be released simply. When the call is transferred back to the source CTI platform, the source CTI platform sets the source traffic resource device in an active state to continue with processing the call. Accordingly, during the entire call transfer service, the state of the source traffic resource device is set only by the source CTI platform independently of the source traffic resource device and the target traffic resource device without any additional data exchange. Therefore the embodiments of the invention may reduce the coupling degree between the platform and the service side in the call transfer service and improve reliability of the system.

For the source traffic resource device, the call hang and transfer function may be enabled simply by invoking a shared traffic resource device query interface and a call hang and transfer request interface in a specific implementation, thereby reducing difficulty in developing the service.

The embodiments of the call transfer method, the computer telephone integration platform, the traffic resource device, the call center system and the communication system have been described in details above, the principle and embodiments of the invention have been set forth in the context by way of specific examples, and the embodiments are described above merely to facilitate understanding of the inventive method and the essential idea thereof. Those ordinarily skilled in the art may modify the embodiments and their application scopes without departing from the spirit of the invention. Accordingly, the disclosure of the specification shall not be taken in any way of limiting the scope of the invention as defined in the appended claims.

## Claims

1. A call transfer method, **characterized by** comprising:
transferring, by a source Computer Telephone Integration, CTI, platform, a call of a user terminal processed by a source traffic resource device to a target traffic resource device in accordance with a call hang and transfer request sent from the source traffic resource device, and setting the source traffic resource device in a suspended state in accordance with a call processing response message provided from a target CTI platform; and
receiving a call release notification message sent from the target CTI platform after the target traffic resource device processes the call, setting the source traffic resource device in an active state, and transferring the call of the user terminal back to the source traffic resource device.

2. The call transfer method according to claim 1, wherein the transferring by the source CTI platform of the call of the user terminal processed by the source traffic resource device to the target traffic resource device in accordance with the call hang and transfer request of the source traffic resource device comprises:
receiving, by the source CTI platform, the call hang and transfer request sent from the source traffic resource device in accordance with a call transfer instruction of the user terminal;
generating a call number in accordance with an obtained identity of target traffic resource device;
initiating a call for transferring the call of the user terminal to the target CTI platform in accordance with an obtained identity of the target CTI platform, and providing via the call the target CTI platform with the call number; and
distributing, by the target CTI platform, the call of the user terminal to the target traffic resource device indicated by the identity of the target traffic resource device.

3. The call transfer method according to claim 2, wherein the identity of the target traffic resource device and the identity of the target CTI platform are obtained from the call hang and transfer request provided from the source traffic resource device.

4. The call transfer method according to claim 3, wherein the obtaining by the source traffic resource device of the identity of the target traffic resource device and the identity of the target CTI platform to which the device is homed comprises:
sending, by the source traffic resource device, a shared traffic resource device query request to the source CTI platform;
returning, by the source CTI platform, shared information of the traffic resource device to the source traffic resource device after obtaining the shared information of the traffic resource device; and
obtaining, by the source traffic resource device, the identity of the target traffic resource device and the identity of the target CTI platform to which the target traffic resource device is homed in accordance with the shared information of the traffic resource device and the call transfer instruction of the user terminal.

5. The call transfer method according to claim 4, wherein the obtaining by the source CTI platform of the shared information of the traffic resource device comprises:
forwarding, by the source CTI platform, the shared traffic resource device query request to a Shared Control Center, SCC, and providing, by the SCC, the source CTI platform with the reported shared information of the traffic resource device in accordance with the query request; or
obtaining, by the source CTI platform, the locally stored shared information of the traffic resource device, which is provided from the SCC on its own initiative to the source CTI platform in advance.

6. The call transfer method according to claim 4 or 5, wherein the obtaining of the identity of the target traffic resource device and the identity of the target CTI platform to which the device is homed in accordance with the shared information of the traffic resource device and the call transfer instruction of the user terminal comprises:
determining the target traffic resource device in accordance with service function information in the shared information of the traffic resource device and service type information in the call transfer instruction of the user terminal; and
extracting the device identity corresponding to the target traffic resource device and the identity of the target CTI platform to which the device is homed from the shared information of the traffic resource device.

7. The call transfer method according to claim 5, wherein the shared information of the traffic resource device provided from the SCC to the source CTI platform is reported from the CTI platform managed by the SCC in advance or in a real time way in accordance with the shared information of the traffic resource device report request sent from the SCC.

8. A computer telephone integration platform, **characterized by** comprising:
a receiving unit adapted to receive a call hang and transfer request from a source traffic resource device, a call processing response message and a call release notification message from a target Computer Telephone Integration, CTI, platform;
a call transfer unit adapted to transfer a call of a user terminal processed by the source traffic resource device to a target traffic resource device after the receiving unit receives the call hang and transfer request and to transfer the call of user terminal released by the target traffic resource device back to the source traffic resource device when the receiving unit receives the call release notification message; and
a device state update unit adapted to set the source traffic resource device in a suspended state when the receiving unit receives the call processing response message and to set the source traffic resource device in an active state when the receiving unit receives the call release notification message.

9. The computer telephone integration platform according to claim 8, wherein the call transfer unit comprises:
a target device identity extracting unit adapted to extract an identity of the target CTI platform and an identity of the target traffic resource device from the call hang and transfer request;
a call number generation unit adapted to generate a call number in accordance with the identity of the target traffic resource device; and
a call unit adapted to initiate a call for transferring the call of the user terminal processed by the source traffic resource device to the target CTI platform in accordance with the identity of the target CTI platform, to provide via the call the target CTI platform with the call number, and to transfer the call of the user terminal released by the target traffic resource device back to the source traffic resource device when the receiving unit receives the call release notification message.

10. The computer telephone integration platform according to claim 8 or 9, further comprising a sending unit, wherein
the receiving unit is further adapted to receive a shared traffic resource device query request from the source traffic resource device and shared information of the traffic resource device provided from an Shared Control Center, SCC, in accordance with the received shared traffic resource device query request; and
the sending unit is adapted to forward the shared traffic resource device query request to the SCC and to provide the source traffic resource device with the shared information of the traffic resource device received by the receiving unit.

11. The computer telephone integration platform according to claim 8 or 9, further comprising a sending unit and a storage unit; wherein
the storage unit is adapted to store the shared information of the traffic resource device provided from an SCC in advance;
the receiving unit is further adapted to receive the shared traffic resource device query request from the source traffic resource device; and
the sending unit is adapted to send the shared information of the traffic resource device obtained from the storage unit to the source traffic resource device in accordance with the shared traffic resource device query request.

12. The computer telephone integration platform according to claim 11, further comprising:
a device selection unit adapted to select a shared traffic resource device complying with a certain condition according to the shared information of the traffic resource device received by the receiving unit or stored in the storage unit and to provide the sending unit with the shared information of the traffic resource device corresponding to the shared traffic resource device.

13. The computer telephone integration platform according to claim 8, wherein the call transfer unit comprises:
a target device obtaining unit adapted to obtain an identity of the target CTI platform and an identity of the target traffic resource device;
a call number generation unit adapted to generate a call number in accordance with the identity of the target traffic resource device; and
a call unit adapted to initiate a call for transferring the call of the user terminal processed by the source traffic resource device to the target CTI platform in accordance with the identity of the target CTI platform, to provide via the call the target CTI platform with the call number, and to transfer the call of the user terminal released by the target traffic resource device back to the source traffic resource device when the receiving unit receives the call release notification message.

14. The computer telephone integration platform according to claim 13, wherein the receiving unit is further adapted to receive shared information of the traffic resource device provided by the SCC; and
the target device obtaining unit comprises:
a call transfer instruction obtaining unit adapted to obtain the call transfer instruction of the user terminal from the call hang and transfer request;
a target device determination unit adapted to determine the target traffic resource device in accordance with the call transfer instruction and the shared information of the traffic resource device; and
a target device identity extracting unit adapted to extract a device identity corresponding to the target traffic resource device and an identity of the target CTI platform to which the device is homed from the shared information of the traffic resource device.

15. A traffic resource device, **characterized by** comprising:
a sending unit adapted to send to a Computer Telephone Integration, CTI, platform to which the traffic resource device is homed a shared traffic resource device query request and a call hang and transfer request that comprises an identity of a target traffic resource device and an identity of a target CTI platform to which the target traffic resource device is homed, which are obtained by a target identity obtaining unit;
a receiving unit adapted to receive shared information of the traffic resource devices returned from the CTI platform in accordance with the shared traffic resource device query request; and
the target identity obtaining unit adapted to obtain the identity of the target traffic resource device and the identity of the target CTI platform to which the device is homed in accordance with the shared information of the traffic resource device and call transfer instruction from a user terminal.

16. The traffic resource device according to claim 15, wherein the target identity obtaining unit comprises:
a target traffic resource device obtaining unit adapted to determine the target traffic resource device in accordance with device description information in the shared information of the traffic resource device received by the receiving unit and the call transfer instruction from the user terminal; and
a target identity extracting unit adapted to extract a device identity corresponding to the target traffic resource device and the identity of the target CTI platform to which the device is homed from the information of the traffic resource device received by the receiving unit.

17. A call center system, comprising an automatic call distribution device, a Computer Telephone Integration, CTI, platform and a traffic resource device; wherein
the automatic call distribution device is adapted to route a call of a user terminal to the CTI platform;
the CTI platform is adapted to distribute the call of the user terminal to the traffic resource device, to receive a call hang and transfer request sent from the traffic resource device, to transfer the call of the user terminal processed by the traffic resource device to a target traffic resource device, to receive a call processing response message from a target CTI platform and set the traffic resource device in a suspended state in accordance with the message; and to receive a call release notification message from the target CTI platform, set the traffic resource device in an active state in accordance with the message and transfer the call of the user terminal released by the target traffic resource device back to the traffic resource device; and
the traffic resource device is adapted to send the call hang and transfer request to the CTI platform in accordance with call transfer instruction of the user terminal.

18. A communication system, comprising a source call center system and a target call center system, wherein the source call center system comprises a source automatic call distribution device, a source Computer Telephone Integration (CTI) platform and a source traffic resource device, and the target call center system comprises a target automatic call distribution device, a target CTI platform and a target traffic resource device;
the source automatic call distribution device is adapted to route a call of a user terminal to the source CTI platform;
the source CTI platform is adapted to distribute the call of the user terminal to the source traffic resource device; to receive a call hang and transfer request sent from the source traffic resource device and transfer the call of the user terminal processed by the source traffic resource device to the target traffic resource device; to receive a call processing response message from the target CTI platform and set the source traffic resource device in a suspended state in accordance with the message; and to receive a call release notification message from the target CTI platform, set the source traffic resource device in an active state in accordance with the message and transfer the call of the user terminal released by the target traffic resource device back to the source traffic resource device;
the source traffic resource device is adapted to send the call hang and transfer request to the source CTI platform in accordance with a call transfer instruction of the user terminal;
the target automatic call distribution device is adapted to send a call processing request to the target CTI platform in accordance with the call from the source CTI platform;
the target traffic resource device is adapted to send a call processing end message to the target CTI platform at the end of processing the call of the user terminal; and
the target CTI platform is adapted to route the call of the source CTI platform to the target traffic resource device in accordance with the call processing request; to send the call processing response message to the source CTI platform; and to release the call of the user terminal in accordance with the call processing end message and send the call release notification message to the source CTI platform.

19. The communication system according to claim 18, further comprising a shared control center adapted to receive shared information of the traffic resource device reported from the target CTI platform and to provide the source CTI platform with the information.
